# EUROPEAN PATENT SPECIFICATION

(11) **EP 3 719 623 B1**
(45) Date of publication and mention of the grant of the patent: **20.08.2025**
(21) Application number: 18884714.9
(22) Date of filing: 14.11.2018
(51) Int. Cl.: H04M 1/72484, G06F 3/04883, G06F 3/04817, G06F 21/32, G06F 1/16, G06F 3/04847, G06V 40/60, H04M 1/67, H04M 1/724, H04M 1/7243

(54) **APPLICATION ICON DISPLAY METHOD, TERMINAL, AND COMPUTER READABLE STORAGE MEDIUM**
ANZEIGEVERFAHREN FÜR EIN ANWENDUNGSSYMBOL, ENDGERÄT UND COMPUTERLESBARES SPEICHERMEDIUM
PROCÉDÉ D'AFFICHAGE D'ICÔNE D'APPLICATION, TERMINAL ET SUPPORT D'INFORMATIONS LISIBLE PAR ORDINATEUR

(30) Priority: 30.11.2017 CN 201711237624
(43) Date of publication of application: 07.10.2020
(73) Proprietor: Vivo Mobile Communication Co., Ltd., Dongguan, Guangdong 523860 (CN)
(72) Inventor: HUANG, Pan, Dongguan Guangdong 523860 (CN)
(74) Representative: Conti, Marco
(86) International application number: PCT/CN2018/115395
(87) International publication number: WO 2019/105227

(56) References cited:
- CN-A- 104 679 220
- CN-A- 105 825 114
- CN-A- 106 527 896
- CN-A- 106 843 697
- CN-A- 107 231 677
- CN-A- 107 329 661
- CN-A- 108 021 302
- US-A1- 2016 342 327

## Description

### TECHNICAL FIELD

The present disclosure relates to the technical field of terminals, and in particular, to an application icon display method and a terminal.

### BACKGROUND

In related art, for a screen optical fingerprint in a fixed region, a screen fingerprint identification region needs to be specified to guide a user to touch the region with a finger to unlock a terminal; specifically, a pattern of the fingerprint may be provided in the region to remind the user that the region is a fingerprint unlocking region, which may be touched for unlocking.

However, the provision of the above fingerprint unlocking region is not perfect, which is relatively simple. In addition, if the terminal receives a new message, the new message will also be displayed separately in the terminal. Separate displays will increase power consumption, and are also inconvenient for the user to view, thereby reducing user experience.

CN107329661Arelates to an information display method, an information display device, a storage medium and a terminal. The information display method includes: detecting whether a notification message is received when a display screen of the terminal is in a screen-off state; if the notification message is received, determining a target application that generates the notification message; and displaying an application icon of the target application in a display area of a fingerprint module. In this scheme, when the notification message is received, a corresponding application icon is displayed in only the display area of the fingerprint module to remind a user; the display area is small, and thus power consumption of the terminal is reduced.

CN107231677A relates to a sleep screen awakening method, a sleep screen awakening device and a mobile terminal. The method comprise: displaying a fingerprint sensing interface in a preset area of a touch screen when the touch screen is turned off, wherein the preset area is used for collecting fingerprints; monitoring whether there is a touch input operation in the present area, when it is monitored that there is the touch input in the preset area, collecting fingerprint information of the touch input through a fingerprint sensor arranged below the preset area; and matching the collected fingerprint information of the touch input with the preset fingerprint information, and if the matching is successful, unlocking and awakening the touch screen.

CN105825114A relates to an unlocking method of a mobile terminal and the mobile terminal. The method comprises: displaying notification information of an application program in a standby interface; collecting fingerprint information in a display area of the notification information; determining whether the fingerprint information is matched with preset fingerprint information, wherein the preset fingerprint information is pre-stored fingerprint information; if the fingerprint information is matched with the preset fingerprint information, unlocking the mobile terminal.

### SUMMARY

The scope of the present invention is determined only by the scope of the appended claims. More precisely, in a first aspect, the embodiments of the present disclosure provide an application icon display method according to claim 1 and further detailed in the dependent claims referring back to this claim.

In a second aspect, the embodiments of the present disclosure further provide a terminal according to claim 5 and further detailed in the dependent claims referring back to this claim.

### BRIEF DESCRIPTION OF THE DRAWINGS

Fig. 1 is a schematic flowchart of an application icon display method according to an embodiment of the present disclosure;
Fig. 2 is a schematic flowchart of parameter setting of the application icon display method according to an embodiment of the present disclosure;
Fig. 3 is a schematic diagram of a screen-locking time icon according to an embodiment of the present disclosure;
Fig. 4 is a first schematic structural diagram of a terminal according to an embodiment of the present disclosure; and
Fig. 5 is a second schematic structural diagram of the terminal according to an embodiment of the present disclosure.

### DETAILED DESCRIPTION

Technical solutions in the embodiments of the present disclosure will be clearly and completely described below in combination with the accompanying drawings in the embodiments of the present disclosure. Obviously, scope of the invention is defined by the scope of the appended claims.

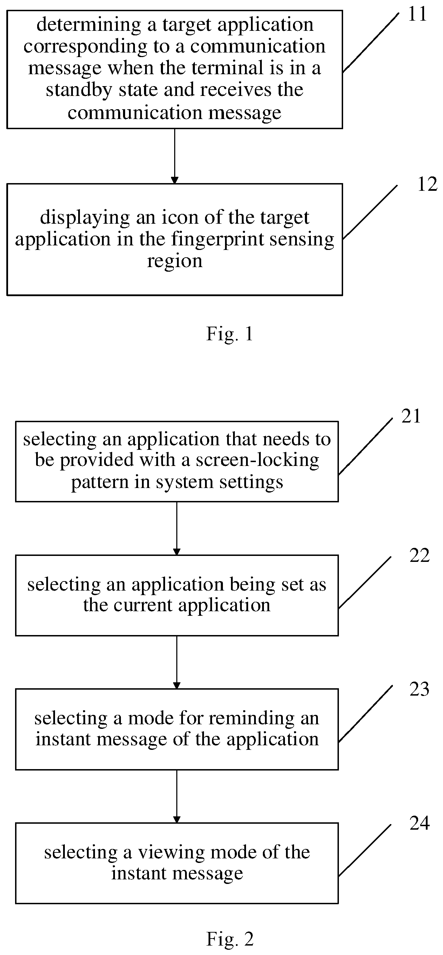

For a problem of single function of a fingerprint unlocking region and waste of display resources in the related art, the present disclosure provides an application icon display method, which is applied to a terminal, and there is a fingerprint sensing region on a display screen of the terminal. As shown in Fig. 1, the method includes steps 11 to 12.

Step 11: determining a target application corresponding to a communication message when the terminal is in a standby state and receives the communication message.

Specifically, the standby state may be a screen-locking state, or a screen-off state where the display screen is off. Optionally, in order to save electric power, step 11 may be specifically: determining the target application corresponding to the communication message when the terminal is in the screen-off state and receives the communication message.

Step 12: displaying an icon of the target application in the fingerprint sensing region.

In step 12, the fingerprint sensing region refers to a preset region on the touch screen, and the mobile terminal authenticates the user according to fingerprint information of the user collected in the preset region.

Optionally, corresponding to the above specific implementation of step 11 for saving electric power, step 12 may be specifically: lightening the icon for displaying the target application in the fingerprint sensing region.

For a scenario where the communication messages corresponding to the multiple target applications are received by the terminal within a preset time period, step 12 may be specifically: when a quantity of the target applications is greater than or equal to two, selecting, according to priority level information of the target applications, the icon of the target application with the highest priority level among the target applications, and displaying the icon of the target application with the highest priority level. In this way, when multiple icons need to be displayed, only the icon with the highest priority level is displayed, which further avoids a problem of increasing display power consumption caused by displaying the multiple icons at the same time, and also prevents a user from missing important information.

Considering a scenario where the terminal does not receive any communication message, the method further includes: displaying a fingerprint unlock pattern in the fingerprint sensing region when the terminal is in the standby state and receives no communication message.

More specifically, step 12 is specifically: judging importance of the communication message according to a usage frequency of the application corresponding to the communication message, a historical communication message, a core content of the message, etc.; if the importance is high, modifying a parameter manually set by the user, which includes, for example, automatically setting a current application icon as the target application icon, automatically shortening time interval for displaying the communication message, checking an option for a mode for reminding the communication message.

According to the application icon display method provided by the embodiments of the present disclosure, the target application corresponding to the communication message is determined when the terminal is in the standby state and receives the communication message, and the icon of the target application is displayed in the fingerprint sensing region, which may integrate an icon display (information reminder) of the corresponding target application into the fingerprint sensing region of the screen when receiving a new notification message, reduce power consumption for displaying multiple elements on the screen, make a function of the fingerprint sensing region of the screen more flexible, improve the user experience, and well solve the problem of single function of the fingerprint unlocking region and waste of display resources in the related art.

Further, after the step of displaying the icon of the target application in the fingerprint sensing region, the application icon display method further includes: acquiring a switching operation on the fingerprint sensing region; and determining the icon of the target application to be displayed at present according to the switching operation, and displaying the icon of the target application in the fingerprint sensing region.

In this way, when the communication messages corresponding to the multiple target applications are received by the terminal within the preset time period, the switching operation is input according to the user's needs, and the application icon is switched to be displayed in the fingerprint sensing region, which is convenient for the user to confirm whether there is a communication message that needs to be processed immediately, and improves the user experience.

Furthermore, after the step of displaying the icon of the target application in the fingerprint sensing region, the application icon display method further includes: in a first mode, when receiving multiple communication messages corresponding to the multiple target applications, displaying, in the fingerprint sensing region, the icons of the multiple target applications by turns at a first preset time interval in a cyclical manner, wherein the first mode is not according to the invention and is present for illustration purposes only; or in a second mode, when receiving the multiple communication messages corresponding to the multiple target applications, acquiring a target communication message from the multiple communication messages according to a preset parameter; and determining the target application corresponding to the target communication message, and displaying the icon of the target application in the fingerprint sensing region, wherein the multiple target applications include a target application corresponding to an icon having been displayed in the fingerprint sensing region and at least one target application corresponding to an icon to be displayed; or the multiple target applications only include at least two target applications corresponding to icons to be displayed.

The above-mentioned first mode is convenient for the user to know all communication messages received by the terminal and perform reasonable processing according to requirements; and the above-mentioned second mode is convenient for the user to know that the terminal has received the communication message of high importance as quickly as possible, so as to improve the user experience and reduce user operations.

In the above-mentioned second mode, acquiring the target communication message from the multiple communication messages according to the preset parameter is: judging the importance of the communication message according to the usage frequency of the application corresponding to the communication message, the historical communication message, the core content of the message.; and if the importance is the highest, the communication message is taken as the target communication message; correspondingly, determining the target application corresponding to the target communication message, and displaying the icon of the target application in the fingerprint sensing region may specifically be: modifying the parameter manually set by the user, for example, automatically setting a current application icon as the target application icon, automatically shortening the time interval for displaying the communication messages, checking an option for a mode for reminding the communication message, etc.

With respect to view the communication message, in this embodiment, after the step of displaying the icon of the target application in the fingerprint sensing region, the application icon display method further includes: when detecting a predetermined viewing operation of a user with respect to the icon of the target application, unlocking the display screen according to user fingerprint information corresponding to the predetermined viewing operation, and displaying the communication message corresponding to the target application on the display screen; or when detecting the predetermined viewing operation of the user with respect to the icon of the target application, unlocking the display screen according to the user fingerprint information corresponding to the predetermined viewing operation, and displaying a message interface of the target application on the display screen.

That is, after detecting the predetermined viewing operation of the user with respect to the icon of the target application, the corresponding communication message may be displayed directly (which is mainly for case of receiving one communication message; when the multiple communication messages are received, a latest received communication message may be displayed preferentially, and the present disclosure is not limited thereto), or the message interface of the target application may be displayed directly (which is mainly for a case of receiving the multiple communication messages, so that the user may preferentially view a certain communication message according to requirements).

In this way, the user may operate the icon displayed on the fingerprint sensing region, so as to implement fingerprint authentication and view information through fewer operation, which simplifies tedious operations in the related art where firstly the user needs to be verified for unlocking and then the application needs to be searched and the corresponding icon needs to be clicked to enable the user to view the application, and improves the user experience.

The fingerprint information of the user corresponding to the predetermined viewing operation may be by default the same as the fingerprint information set for unlocking the screen, or may specify the fingerprint information of another finger.

The above predetermined viewing operation may be specifically: double-clicking the fingerprint region, or the fingerprint plus a volume-up key, or the fingerprint plus a volume-down key, or the like.

Further, after the step of displaying the icon of the target application in the fingerprint sensing region, the application icon display method further includes: zooming in and zooming out the icon of the target application by turns at a second preset time interval in a cyclical manner; or displaying the icon of the target application in a vibration manner according to a preset frequency.

In this way, the user may be reminded to a greater extent that the communication message is received by the terminal, and the user experience may be improved.

The application icon display method provided by the embodiments of the present disclosure will be further described below.

In view of the above technical problem, an embodiment of the present disclosure provides an application icon display method, which may specifically include: when there is no new message, the pattern of the fingerprint displayed in the fingerprint sensing region is used to remind the user to click the fingerprint to unlock the screen, it may open a graphical application and open an instant message by double-clicking the fingerprint or the like; when a new message arrives, the pattern of the fingerprint is changed into the application icon of the new message. Since the user sees the icon of the new message and clicks it habitually, direct display of the instant message may be set, or the instant message may be viewed only by double-clicking the fingerprint or the like. The fingerprint of the user is read through the screen. If it is a preset fingerprint, the screen of the terminal will be unlocked and an application message will be opened. Subsequently, the mode for displaying the icon of the new message may be defined, and a plurality of new messages of different applications may also be displayed in a cyclical manner, and so on.

The embodiments of the present disclosure provide various unlock icons for the user to select, and the user may slide the finger among the unlock icons to select his preferred unlocking pattern; a time modification pattern of automatic screen locking is also provided to enable the user to select a specific screen-locking time, or reset back to an original unlocking time setting.

In a solution in the related art, a Short Message Service (SMS) message, a WeChat message, a QQ message, or the like will appear directly at the top of the screen, with poor confidentiality with respect to, e.g., a payment verification code, SMS notification of mobile banking, etc. In the embodiments of the present disclosure, important and commonly used applications such as SMS, WeChat, and QQ may be integrated into a screen-locking region of a screen fingerprint. When the new message comes, the screen-locking pattern of the application will be set to be the current screen-locking pattern, and the user will be reminded to double-click the fingerprint to view the message by vibrating or zooming in or zooming out the icon or the like. If instant messages of multiple applications comes, these screen-locking patterns will be displayed by turns in a screen optical fingerprint region (fingerprint sensing region) in a cyclical manner at the time interval that may be set by the user himself, and each screen-locking pattern may remind the user to double-click the fingerprint to view the corresponding message by vibrating or zooming in or zooming out the icon or the like.

As shown in Fig. 2, steps 21 to 24 may be provided before an implementation of the solution provided by the embodiments of the present disclosure.

Step 21: selecting an application that needs to be provided with a screen-locking pattern in system settings.

The user selects an application that needs to be provided with the screen-locking pattern or needs to delete the corresponding screen-locking pattern in a system setting interface, and a region in a circle corresponding to the specific selected application (an identification on whether it is selected) will be highlighted. The screen-locking pattern may be an application icon directly or an icon customized by a User Interface (UI) engineer.

After selecting the application, the user may slide the finger freely on an interface of the locked screen to view the application icon.

For editing of an application having been provided with the corresponding screen-locking pattern, the application that needs to delete the corresponding screen-locking pattern may be tapped and held, and then a delete menu will pop up, and then the corresponding screen-locking pattern may be directly removed.

Step 22: selecting an application being set as the current application (select the target application).

The user may select the application to be set as the current application in the system setting interface. For the applications having been provided with the screen-locking patterns, the applications may be sorted by dragging the icons. For example, an application named "115" in a first place is a current application of an interface of the locked screen. An application named "12306 Zhixing Train Ticket" is the next application of the interface of the locked screen. The user may select to slide any application to move the application to the first place, and the application in the first place is the current application of the interface of the locked screen.

The Step 22 may be directed to a setting before implementation of the solution, which is not limited herein.

Step 23: selecting a mode for reminding an instant message (communication message) of the application.

The user may select an application that needs to set the instant message in the system setting interface. For the application having been provided with the screen-locking pattern, the application may be clicked to display a reminder of the instant message. In the following, there is a corresponding option about whether the application allows the reminder of the instant message. If the instant message is not allowed, the notification pattern setting becomes grey and cannot be set; if the instant message is allowed, the notification pattern may be set. The mode for reminding the instant message may be selected as vibrating the icon, or zooming in and zooming out the icon and time interval between zooming in and zooming out (such as 5 seconds, 10 seconds, 30 seconds, etc.), or another mode, such as single selection or multiple selections; and the time interval for reminding the instant message may be selected, which may be determined by a UI engineer.

More importantly, on a first page of a menu, an artificial intelligence option may be added to automatically determine importance of the instant message through a custom algorithm, and the time interval for reminding the instant message and the viewing method of the instant message may be automatically changed. For example, after enabling the artificial intelligence option, the system may judge the importance of the instant message according to, e.g., the usage frequency of the application, a historical instant message, and the core content of the message. If the instant message is judged to be very important, the parameter manually set in the previous step may be changed, for example, the application of the instant message that is judged to be extremely important is automatically set as the current application, the time interval of the provision (display) of the instant message is automatically speeded up (shortened), and a corresponding option of the mode for reminding the instant message is checked, and so on. If the importance of the instant message is judged to be ordinary, a system setting may be followed.

If the judge through the artificial intelligence is not required, a corresponding option may be unchecked.

Step 24: selecting a viewing mode of the instant message.

The user may select the viewing mode of the instant message in the system setting interface. For the application having been provided with the screen-locking pattern, the application may be clicked to display the viewing mode of the instant message. In the following, there is a corresponding option about whether the application allows direct viewing of the instant message. If the direct display and viewing of the instant message is allowed, the display mode becomes grey and cannot be set, and the confidentiality is poor; if the direct display and viewing of the instant message are not allowed, the display mode may be set accordingly, and the confidentiality is good.

The mode of displaying and viewing the instant message may be selected. The user may select the fingerprint of which finger (such as index finger, middle finger, ring finger, etc.) to open the instant message, the fingerprint may be by default a fingerprint set for unlocking the screen, or a fingerprint of another finger may be selected. After selecting the finger, a specific viewing mode may be selected, which may be double-clicking the fingerprint region, or the fingerprint plus a volume-up key, or the fingerprint plus a volume-down key, or the like, which may be only a single selection. The details thereof may be determined by the UI engineer.

In addition, for the above solution, in the embodiments of the present disclosure, when there is no new message, the icon of the preset application may be displayed in the fingerprint sensing region. In the following, for example, the screen-locking time setting application may be used.

In reality, the user has a need to quickly modify the screen-locking time. For example, sometimes the user needs to manually copy the content displayed on the screen of the mobile phone. However, when the screen-locking time is too short, and the automatic screen locking will cause handwriting to be interrupted, the user must unlock the screen or sets the screen-locking time to extend the screen-locking time. In the related art, a default setting mode of the screen-locking time requires the user to modify it in the system settings, and a setting path is relatively long. The user may forget to reset the screen-locking time to the default screen-locking time after the modification.

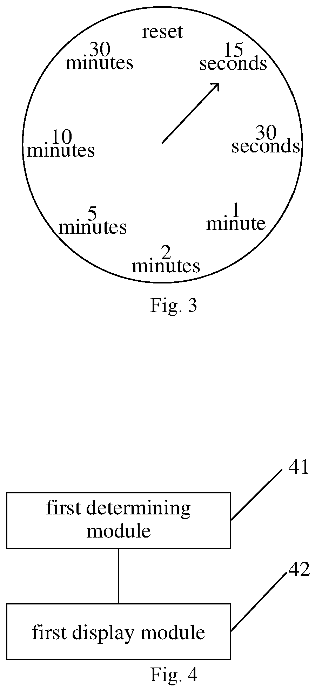

Therefore, the embodiments of the present disclosure provide a screen-locking time setting, which may set the system screen-locking time more quickly. As shown in Fig. 3, an icon for the screen-locking time may be designed in a standby pattern, which may be similar to an icon of a clock or another type of icon, and may be determined by the UI engineer.

The user may turn the pointer to select the screen-locking time that he needs temporarily, such as 15 seconds, 30 seconds, 1 minute, 2 minutes, 5 minutes, 10 minutes, 30 minutes, etc. After the task is completed, the pointer may be restored to a reset position, and the screen-locking time may be changed to an initial screen-locking time of the system, e.g., 15 seconds.

As can be seen from the above, the solution provided by the embodiments of the present disclosure mainly includes: a fingerprint pattern is displayed when there is no new message, so as to remind the user to click the fingerprint pattern for unlocking; when there is a new message, the fingerprint pattern is replaced by the icon of the new message, and only the icon of the new message is displayed, the fingerprint pattern is not displayed. As a result, it may reduce the content to be displayed and save power. It well solves the problem of single function of the fingerprint unlocking region and waste of display resources in the related art. Furthermore, in this embodiment, the screen-off display technology may be used to maximize energy saving.

Through the above mode, the user may freely select the pattern of the interface of the locked screen, set the mode for reminding the instant message, improve security of instant message viewing, and may also set the screen-locking time more quickly and conveniently. More importantly, the importance of the instant message may be automatically determined through the artificial intelligence option, thereby automatically changing the time interval for reminding the instant message and the viewing mode of the instant message. As a result, the user experience may be improved and the user may be more comfortable in using the mobile phone.

An embodiment of the present disclosure also provides a terminal, and there is a fingerprint sensing region on a display screen of the terminal. As shown in Fig. 4, the terminal includes: a first determining module 41, used to determine a target application corresponding to a communication message when the terminal is in a standby state and receives the communication message; and a first display module 42, used to display an icon of the target application in the fingerprint sensing region.

According to the terminal provided by the embodiments of the present disclosure, the target application corresponding to the communication message is determined when the terminal is in the standby state and receives the communication message, and the icon of the target application is displayed in the fingerprint sensing region, which may integrate an icon display (information reminder) of the corresponding target application into the fingerprint sensing region of the screen when receiving a new notification message, reduce power consumption for displaying multiple elements on the screen, make a function of the fingerprint sensing region of the screen more flexible, improve the user experience, and well solve the problem of single function of the fingerprint unlocking region and waste of display resources in the related art.

The first determination module includes: a first determining sub-module, used to determine the target application corresponding to the communication message when the terminal is in a screen-off state and receives the communication message; and the first display module includes: a first display sub-module, used to lighten the icon for displaying the target application in the fingerprint sensing region.

Specifically, the first display module includes: a first processing sub-module, used to select, according to priority level information of the target applications, the icon of the target application with the highest priority level among the target applications when a quantity of the target applications is greater than or equal to two, and display the icon of the target application with the highest priority level.

Considering a scenario where the terminal does not receive a communication message, the terminal further includes: a second display module, used to display a fingerprint unlock pattern in the fingerprint sensing region when the terminal is in the standby state and receives no communication message.

Further, the terminal further includes: a first acquiring module, used to acquire a switching operation on the fingerprint sensing region after the icon of the target application is displayed in the fingerprint sensing region; a first processing module, used to determine the icon of the target application to be displayed at present according to the switching operation, and display the icon of the target application in the fingerprint sensing region.

Furthermore, the terminal further includes: a third display module, used to display in the fingerprint sensing region, the icons of the multiple target applications by turns at a first preset time interval in a cyclical manner, when receiving multiple communication messages corresponding to multiple target applications after the icon of the target application is displayed in the fingerprint sensing region, wherein the third display module is not according to the invention and is present for illustration purposes only; or a second processing module, used to acquire a target communication message from the multiple communication messages according to a preset parameter when receiving the multiple communication messages corresponding to the multiple target applications after the icon of the target application is displayed in the fingerprint sensing region, determine the target application corresponding to the target communication message, and display the icon of the target application in the fingerprint sensing region, wherein the multiple target applications include a target application corresponding to an icon having been displayed in the fingerprint sensing region and at least one target application corresponding to an icon to be displayed; or the multiple target applications only include at least two target applications corresponding to icons to be displayed.

Considering a scenario where the communication message is to be viewed, in this embodiment, the terminal further includes: a third processing module, used to unlock, when detecting a predetermined viewing operation of a user with respect to the icon of the target application after the icon of the target application is displayed in the fingerprint sensing region, the display screen according to user fingerprint information corresponding to the predetermined viewing operation, and display the communication message corresponding to the target application on the display screen; or a fourth processing module, used to unlock, when detecting the predetermined viewing operation of the user with respect to the icon of the target application after the icon of the target application is displayed in the fingerprint sensing region, the display screen according to the user fingerprint information corresponding to the predetermined viewing operation, and display a message interface of the target application on the display screen.

Further, the terminal further includes: a fourth display module, used to zoom in and zoom out the icon of the target application by turns at a second preset time interval in a cyclical manner, after the icon of the target application is displayed in the fingerprint sensing region.

The terminal provided by the embodiments of the present disclosure may implement various processes implemented by the terminal in the method embodiments of Fig. 1 to 3. To avoid repetition, details thereof will not be repeated herein.

As can be seen from the above, the above solution provided by the embodiments of the present disclosure well solves the problem of single function of the fingerprint unlocking region and waste of display resources in the related art.

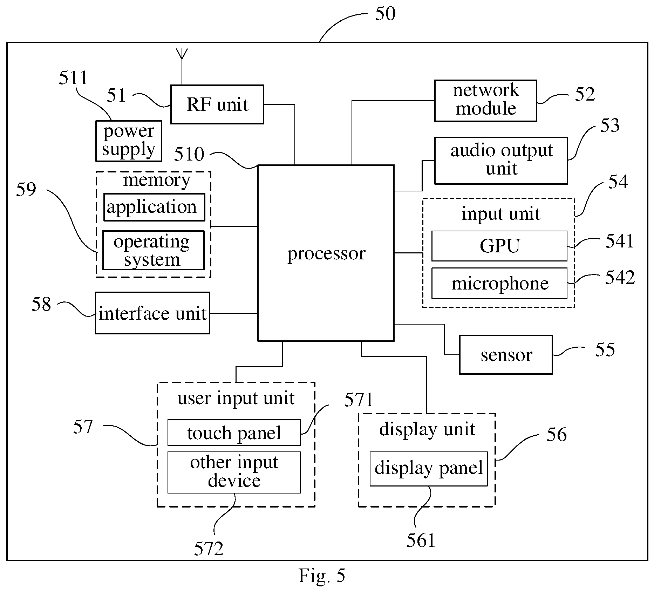

Fig. 5 is a schematic diagram of a hardware structure of a terminal for implementing various embodiments of the present disclosure. The terminal 50 includes but is not limited to: a Radio Frequency (RF) unit 51, a network module 52, an audio output unit 53, an input unit 54, a sensor 55, a display unit 56, a user input unit 57, an interface unit 58, a memory 59, a processor 510, a power supply 511, and the like. A person skilled in the art may understand that the terminal structure shown in Fig. 5 does not constitute a limitation on the terminal, and the terminal may include more or fewer components than those illustrated, or a combination of certain components, or a different component arrangement. In the embodiments of the present disclosure, the terminal includes, but is not limited to, a mobile phone, a tablet computer, a notebook computer, a palmtop computer, a vehicle-mounted terminal, a wearable device, a pedometer, and the like.

There is a fingerprint sensing region on the display screen of the terminal, and the processor 510 is used to: determine a target application corresponding to a communication message when the terminal is in a standby state and receives the communication message; and display an icon of the target application in the fingerprint sensing region.

In the embodiments of the present disclosure, the target application corresponding to the communication message is determined when the terminal is in the standby state and receives the communication message, and the icon of the target application is displayed in the fingerprint sensing region, which may integrate an icon display (information reminder) of the corresponding target application into the fingerprint sensing region of the screen when receiving a new notification message, reduce power consumption for displaying multiple elements on the screen, make a function of the fingerprint sensing region of the screen more flexible, improve the user experience, and well solve the problem of single function of the fingerprint unlocking region and waste of display resources in the related art.

Optionally, the processor 510 is specifically used to: determine the target application corresponding to the communication message when the terminal is in a screen-off state and receives the communication message; and lighten the icon for displaying the target application in the fingerprint sensing region.

Optionally, the processor 510 is specifically used to: select, according to priority level information of the target applications, the icon of the target application with the highest priority level among the target applications when a quantity of the target applications is greater than or equal to two, and display the icon of the target application with the highest priority level.

Optionally, the processor 510 is further used to: display a fingerprint unlock pattern in the fingerprint sensing region when the terminal is in the standby state and receives no communication message.

Optionally, the processor 510 is further used to: acquire a switching operation on the fingerprint sensing region after the icon of the target application is displayed in the fingerprint sensing region; and determine the icon of the target application to be displayed at present according to the switching operation, and display the icon of the target application in the fingerprint sensing region.

Optionally, the processor 510 is further used to: display in the fingerprint sensing region the icons of the multiple target applications by turns at a first preset time interval in a cyclical manner, when receiving multiple communication messages corresponding to multiple target applications after the icon of the target application is displayed in the fingerprint sensing region; or acquire a target communication message from the multiple communication messages according to a preset parameter when receiving the multiple communication messages corresponding to the multiple target applications after the icon of the target application is displayed in the fingerprint sensing region, determine the target application corresponding to the target communication message, and display the icon of the target application in the fingerprint sensing region, wherein the multiple target applications include a target application corresponding to an icon having been displayed in the fingerprint sensing region and at least one target application corresponding to an icon to be displayed; or the multiple target applications only include at least two target applications corresponding to icons to be displayed

Optionally, the processor 510 is further used to: unlock, when detecting a predetermined viewing operation of a user with respect to the icon of the target application after the icon of the target application is displayed in the fingerprint sensing region, the display screen according to user fingerprint information corresponding to the predetermined viewing operation, and display the communication message corresponding to the target application on the display screen; or unlock, when detecting the predetermined viewing operation of the user with respect to the icon of the target application after the icon of the target application is displayed in the fingerprint sensing region, the display screen according to the user fingerprint information corresponding to the predetermined viewing operation, and display a message interface of the target application on the display screen.

Optionally, the processor 510 is further used to: zoom in and zoom out the icon of the target application by turns at a second preset time interval in a cyclical manner, after the icon of the target application is displayed in the fingerprint sensing region.

It should be understood that, in the embodiments of the present disclosure, the RF unit 51 may be used to receive and transmit a signal during a process of receiving and transmitting information or during a call. Specifically, after receiving downlink data from a base station, the downlink data is processed by the processor 510; in addition, uplink data is transmitted to the base station. Generally, the RF unit 51 includes, but is not limited to, an antenna, at least one amplifier, a transceiver, a coupler, a low noise amplifier, a duplexer, and the like. In addition, the RF unit 51 may also communicate with the network and other devices through a wireless communication system.

The terminal provides the user with wireless broadband Internet access through the network module 52, such as enabling the user to send or receive an e-mail, browse a web page, access streaming media, and the like.

The audio output unit 53 may convert audio data received by the RF unit 51 or the network module 52 or stored in the memory 59 into an audio signal and output it as a sound. Moreover, the audio output unit 53 may also provide an audio output related to a specific function performed by the terminal 50 (for example, call signal reception sound, message reception sound, or the like). The audio output unit 53 includes a speaker, a buzzer, a receiver, and the like.

The input unit 54 is used to receive an audio or video signal. The input unit 54 may include a Graphics Processing Unit (GPU) 541 and a microphone 542, and the GPU 541 processes image data of a still picture or a video obtained by an image capturing device (such as a camera) in a video capturing mode or an image capturing mode. A processed image frame may be displayed on the display unit 56. The image frame processed by the GPU 541 may be stored in the memory 59 (or other storage medium) or transmitted via the RF unit 51 or the network module 52. The microphone 542 may receive sound and process such sound into audio data. The processed audio data may be converted into a format output that may be transmitted to a mobile communication base station via the RF unit 51 in a case of a telephone call mode.

The terminal 50 also includes at least one sensor 55, such as a light sensor, a motion sensor, and other sensors. Specifically, the light sensor includes an ambient light sensor and a proximity sensor, wherein the ambient light sensor may adjust brightness of the display panel 561 according to brightness of ambient light, and the proximity sensor may turn off the display panel 561 and/or backlight when the terminal 50 is near an ear. As a kind of motion sensor, an accelerometer sensor may detect magnitude of acceleration in various directions (generally in three axes), and may detect magnitude and direction of the gravity when the accelerometer sensor is still, and may be used to identify attitude of the terminal (such as horizontal and vertical screen switching, related games, magnetometer attitude calibration), vibration identification related functions (such as pedometer, tapping), etc.; the sensor 55 may also include a fingerprint sensor, a pressure sensor, an iris sensor, a molecular sensor, a gyroscope, a barometer, a hygrometer, a thermometer, an infrared sensors, and the like, and details thereof will not be described herein.

The display unit 56 is used to display information input by the user or provided to the user. The display unit 56 may include a display panel 561, which may be configured in a form of a Liquid Crystal Display (LCD), an Organic Light-Emitting Diode (OLED) display, etc.

The user input unit 57 may be used to receive numeric or character information being inputted, and generate a key signal input related to user settings and function control of the terminal. Specifically, the user input unit 57 includes a touch panel 571 and another input device 572. The touch panel 571, also known as a touch screen, may collect the user's touch operation on or near it (such as the user's operation on or near the touch panel 571 using any suitable object or accessory such as fingers, stylus, etc.). The touch panel 571 may include a touch detection device and a touch controller. The touch detection device detects an orientation of the touch of the user, and detects a signal brought by the touch operation, and transmits the signal to the touch controller; and the touch controller receives touch information from the touch detection device and converts it into contact coordinates, then transmits the contact coordinates to the processor 510, and receives a command transmitted by the processor 510 and executes the command. In addition, the touch panel 571 may be implemented in various types, such as a resistive touch panel, a capacitive touch panel, an infrared touch panel, and a surface acoustic wave resistive touch panel. In addition to the touch panel 571, the user input unit 57 may also include the other input device 572. Specifically, the other input device 572 may include, but is not limited to, a physical keyboard, a function key (such as a volume control key, a switch key, etc.), a trackball, a mouse, a joystick, and details thereof will not be described herein.

Further, the touch panel 571 may cover the display panel 561. When the touch panel 571 detects the touch operation on or near it, the touch operation is transmitted to the processor 510 to determine a type of a touch event, and then the processor 510 provides a corresponding visual output on the display panel 561 according to the type of the touch event. Although in Fig. 5, the touch panel 571 and the display panel 561 serve as two independent components to implement input and output functions of the terminal, in some embodiments, the touch panel 571 and the display panel 561 may be integrated to implement the input and output functions of the terminal, which is not specifically limited herein.

The interface unit 58 is an interface for connecting an external device to the terminal 50. For example, the external device may include a wired or wireless headphone port, an external power (or battery charger) port, a wired or wireless data port, a memory card port, a port for connecting a device with an identification module, an audio Input/output (I/O) port, a video I/O port, a headphone port, etc. The interface unit 58 may be used to receive an input (for example, data information, electric power, etc.) from the external device, and transmit the received input to one or more elements within the terminal 50 or may be used transmit data between the terminal 50 and the external device.

The memory 59 may be used to store a software program and various data. The memory 59 may mainly include a program storage region and a data storage region, wherein the program storage region may store an operating system, an application required by at least one function (such as a sound playback function, an image playback function, etc.), etc.; the data storage region may store data (such as audio data, a phone book, etc.) created according to the use of the mobile phone, etc. In addition, the memory 59 may include a high-speed random-access memory, and may also include a non-volatile memory, such as at least one disk storage device, a flash memory device, or another volatile solid-state storage device.

The processor 510 is a control center of the terminal, which uses various interfaces and lines to connect various parts of the entire terminal, runs or executes the software programs and/or modules stored in the memory 59, and calls the data stored in the memory 59, to execute various functions of the terminal and process data, thereby monitoring the terminal as a whole. The processor 510 may include one or more processing units; optionally, the processor 510 may integrate an application processor and a modem processor, wherein the application processor mainly processes an operating system, a user interface, an application, and the like, and the modem processor mainly processes wireless communication. It may be understood that the above modem processor may alternatively not be integrated into the processor 510.

The terminal 50 may also include the power supply 511 (such as a battery) that supplies power to various components. Optionally, the power supply 511 may be logically connected to the processor 510 through a power management system, thereby implementing functions such as charge management, discharge management, and power consumption management through the power management system.

In addition, the terminal 50 includes some functional modules not shown, and details thereof will not be described herein.

Optionally, the embodiments of the present disclosure further provide a terminal, including a processor 510, a memory 59, a computer program stored on the memory 59 and executable on the processor 510, wherein the computer program is used to be executed by the processor 510 to implement various processes of the embodiments of the above application icon display method, and may achieve a same technical effect. In order to avoid repetition, details thereof will not be repeated herein.

The embodiments of the present disclosure further provide a computer-readable storage medium, wherein a computer program is stored on the computer-readable storage medium, and the computer program is used to be executed by a processor to implement various processes of the embodiments of the above application icon display method, and may achieve a same technical effect. In order to avoid repetition, details thereof will not be repeated herein. The computer-readable storage medium may be, for example, a Read-Only Memory (ROM), a Random-Access Memory (RAM), a magnetic disk or an optical disk.

It should be noted that, in the present disclosure, the term "including", "comprising" or any other variant thereof is intended to cover an non-exclusive inclusion, so that a process, method, article or device that includes a series of elements includes not only those elements, but also other elements that are not explicitly listed, or includes elements inherent to such process, method, article, or device. Without more restrictions, an element defined by a statement "include a ..." does not exclude that there are other identical elements in a process, method, article or device that includes the element.

Through the description of the above embodiments, a person skilled in the art may clearly understand that the methods in the above embodiments may be implemented by means of software plus a necessary general hardware platform. Naturally, the methods in the above embodiments may alternatively be implemented by means of hardware, but in many cases, the former is a better implementation. Based on such understanding, the technical solution of the present disclosure may be embodied in a form of a software product in essence, or a part of the technical solution of the present disclosure that contributes to the prior art may be embodied in the form of the software product, and the computer software product is stored in a storage medium (such as ROM/RAM, magnetic disk, optical disk), and includes instructions to enable a terminal (which may be a mobile phone, a computer, a server, an air conditioner, a network device, or the like) to execute the methods described in various embodiments of the present disclosure.

## Claims

1. An application icon display method, wherein the application icon display method is applied to a terminal, there is a fingerprint sensing region on a display screen of the terminal, and the application icon display method comprises:
determining a target application corresponding to a communication message when the terminal is in a standby state and receives the communication message (11); and
displaying an icon of the target application in the fingerprint sensing region (12),
if receiving multiple communication messages corresponding to multiple target applications:
determining the target application corresponding to each target communication message, selecting, according to priority level information of the target applications, the icon of the target application with the highest priority level among the target applications, and displaying the icon of the target application with the highest priority level in the fingerprint sensing region (12);
judging the priority level of the communication message according to a usage frequency of the application corresponding to the communication message and a core content of the communication message;
wherein after the step of displaying the icon of the target application in the fingerprint sensing region (12), the application icon display method further comprises:
when detecting a predetermined viewing operation of a user with respect to the icon of the target application, unlocking the display screen according to user fingerprint information corresponding to the predetermined viewing operation, and displaying the communication message corresponding to the target application on the display screen; or
when detecting the predetermined viewing operation of the user with respect to the icon of the target application, unlocking the display screen according to the user fingerprint information corresponding to the predetermined viewing operation, and displaying a message interface of the target application on the display screen.

2. The application icon display method according to claim 1, wherein
the step of determining the target application corresponding to the communication message when the terminal is in the standby state and receives the communication message (11) comprises:
determining the target application corresponding to the communication message when the terminal is in a screen-off state and receives the communication message; and
the step of displaying the icon of the target application in the fingerprint sensing region (12) comprises:
lightening the icon for displaying the target application in the fingerprint sensing region.

3. The application icon display method according to claim 1, further comprising:
displaying a fingerprint unlock pattern in the fingerprint sensing region when the terminal is in the standby state and receives no communication message.

4. The application icon display method according to claim 1, wherein after the step of displaying the icon of the target application in the fingerprint sensing region (12), the application icon display method further comprises:
zooming in and zooming out the icon of the target application by turns at a second preset time interval in a cyclical manner.

5. A terminal, wherein there is a fingerprint sensing region on a display screen of the terminal, and the terminal comprises:
a first determining module (41), used to determine a target application corresponding to a communication message when the terminal is in a standby state and receives the communication message; and
a first display module (42), used to display an icon of the target application in the fingerprint sensing region;
if receiving multiple communication messages corresponding to multiple target applications:
the first determining module (41) is further used to determine the target application corresponding to each target communication message, select, according to priority level information of the target applications, the icon of the target application with the highest priority level among the target applications, and the first display module (42) is further used to display the icon of the target application with the highest priority level in the fingerprint sensing region;
the first determining module (41) is further used to judge the priority level of the communication message according to a usage frequency of the application corresponding to the communication message and a core content of the communication message;
a first unlocking and displaying module, used to unlock, when detecting a predetermined viewing operation of a user with respect to the icon of the target application after the icon of the target application is displayed in the fingerprint sensing region, the display screen according to user fingerprint information corresponding to the predetermined viewing operation, and display the communication message corresponding to the target application on the display screen; or
a second unlocking and displaying module, used to unlock, when detecting the predetermined viewing operation of the user with respect to the icon of the target application after the icon of the target application is displayed in the fingerprint sensing region, the display screen according to the user fingerprint information corresponding to the predetermined viewing operation, and display a message interface of the target application on the display screen.

6. The terminal according to claim 5, wherein
the first determination module (41) comprises: a first determining sub-module, used to determine the target application corresponding to the communication message when the terminal is in a screen-off state and receives the communication message; and
the first display module (42) comprises: a first display sub-module, used to lighten the icon for displaying the target application in the fingerprint sensing region.

7. The terminal according to claim 5, further comprising:
a second display module, used to display a fingerprint unlock pattern in the fingerprint sensing region when the terminal is in the standby state and receives no communication message.

## Patentansprüche

1. Anzeigeverfahren für ein Anwendungssymbol, wobei das Anzeigeverfahren für ein Anwendungssymbol auf ein Endgerät angewendet wird, ein Fingerabdruckerfassungsbereich auf einem Anzeigebildschirm des Endgeräts vorhanden ist und das Anzeigeverfahren für ein Anwendungssymbol Folgendes umfasst:
Bestimmen einer Zielanwendung, entsprechend einer Kommunikationsnachricht, wenn sich das Endgerät in einem Bereitschaftszustand befindet und die Kommunikationsnachricht (11) empfängt; und
Anzeigen eines Symbols der Zielanwendung in dem Fingerabdruckerfassungsbereich (12),
wenn mehrere Kommunikationsnachrichten empfangen werden, entsprechend mehreren Zielanwendungen:
Bestimmen der Zielanwendung, entsprechend einer jeden Zielkommunikationsnachricht, Auswählen des Symbols der Zielanwendung mit der höchsten Prioritätsstufe unter den Zielanwendungen gemäß Prioritätsstufeninformationen der Zielanwendungen und Anzeigen des Symbols der Zielanwendung mit der höchsten Prioritätsstufe in dem Fingerabdruckerfassungsbereich (12);
Beurteilen der Prioritätsstufe der Kommunikationsnachricht gemäß einer Nutzungshäufigkeit der Anwendung, entsprechend der Kommunikationsnachricht, und einem Kerninhalt der Kommunikationsnachricht;
wobei nach dem Schritt zum Anzeigen des Symbols der Zielanwendung in dem Fingerabdruckerfassungsbereich (12) das Anzeigeverfahren für ein Anwendungssymbol ferner Folgendes umfasst:
wenn ein vorbestimmter Betrachtungsvorgang eines Benutzers in Bezug auf das Symbol der Zielanwendung erkennt wird, Entsperren des Anzeigebildschirms gemäß Benutzerfingerabdruckinformationen, entsprechend dem vorbestimmten Betrachtungsvorgang, und Anzeigen der Kommunikationsnachricht, entsprechend der Zielanwendung, auf dem Anzeigebildschirm; oder
wenn der vorbestimmte Betrachtungsvorgang des Benutzers in Bezug auf das Symbol der Zielanwendung erkennt wird, Entsperren des Anzeigebildschirms gemäß den Benutzerfingerabdruckinformationen, entsprechend dem vorbestimmten Betrachtungsvorgang, und Anzeigen einer Nachrichtenschnittstelle der Zielanwendung auf dem Anzeigebildschirm.

2. Anzeigeverfahren für ein Anwendungssymbol nach Anspruch 1, wobei
der Schritt zum Bestimmen der Zielanwendung, entsprechend der Kommunikationsnachricht, wenn sich das Endgerät im Bereitschaftszustand befindet und die Kommunikationsnachricht (11) empfängt, umfasst:
Bestimmen der Zielanwendung, entsprechend der Kommunikationsnachricht, wenn sich das Endgerät in einem Zustand mit Bildschirm-Abschaltung befindet und die Kommunikationsnachricht empfängt; und
der Schritt zum Anzeigen des Symbols der Zielanwendung in dem Fingerabdruckerfassungsbereich (12) umfasst:
Aufhellen des Symbols zum Anzeigen der Zielanwendung in dem Fingerabdruckerfassungsbereich.

3. Anzeigeverfahren für ein Anwendungssymbol nach Anspruch 1, ferner umfassend:
Anzeigen eines Fingerabdruckentsperrungsmusters in dem Fingerabdruckerfassungsbereich, wenn sich das Endgerät in dem Bereitschaftszustand befindet und keine Kommunikationsnachricht empfängt.

4. Anzeigeverfahren für ein Anwendungssymbol nach Anspruch 1, wobei das Anzeigeverfahren für ein Anwendungssymbol nach dem Schritt zum Anzeigen des Symbols der Zielanwendung in dem Fingerabdruckerfassungsbereich (12) ferner Folgendes umfasst:
Ein- und Auszoomen des Symbols der Zielanwendung abwechselnd in einem zweiten voreingestellten Zeitintervall auf zyklischer Weise.

5. Endgerät, wobei ein Fingerabdruckerfassungsbereich auf einem Anzeigebildschirm des Endgeräts vorhanden ist und das Endgerät Folgendes umfasst:
ein erstes Bestimmungsmodul (41), das verwendet wird, um eine Zielanwendung, entsprechend einer Kommunikationsnachricht, zu bestimmen, wenn sich das Endgerät in einem Bereitschaftszustand befindet und die Kommunikationsnachricht empfängt; und
ein erstes Anzeigemodul (42), das verwendet wird, um ein Symbol der Zielanwendung in dem Fingerabdruckerfassungsbereich anzuzeigen;
wenn mehrere Kommunikationsnachrichten empfangen werden, entsprechend mehreren Zielanwendungen:
das erste Bestimmungsmodul (41) ferner verwendet wird, um die Zielanwendung, entsprechend einer jeden Zielkommunikationsnachricht, zu bestimmen, das Symbol der Zielanwendung mit der höchsten Prioritätsstufe unter den Zielanwendungen gemäß Prioritätsstufeninformationen der Zielanwendungen auszuwählen, und das erste Anzeigemodul (42) ferner verwendet wird, um das Symbol der Zielanwendung mit der höchsten Prioritätsstufe in dem Fingerabdruckerfassungsbereich anzuzeigen;
das erste Bestimmungsmodul (41) ferner verwendet wird, um die Prioritätsstufe der Kommunikationsnachricht gemäß einer Nutzungshäufigkeit der Anwendung, entsprechend der Kommunikationsnachricht, und einem Kerninhalt der Kommunikationsnachricht zu beurteilen;
ein erstes Entsperr- und Anzeigemodul, das verwendet wird, um, wenn ein vorbestimmter Betrachtungsvorgang eines Benutzers in Bezug auf das Symbol der Zielanwendung erkannt wird, nachdem das Symbol der Zielanwendung in dem Fingerabdruckerfassungsbereich angezeigt wird, den Anzeigebildschirm gemäß Benutzerfingerabdruckinformationen, entsprechend dem vorbestimmten Betrachtungsvorgang, zu entsperren und die Kommunikationsnachricht, entsprechend der Zielanwendung, auf dem Anzeigebildschirm anzuzeigen; oder
ein zweites Entsperr- und Anzeigemodul, das verwendet wird, um, wenn ein vorbestimmter Betrachtungsvorgang des Benutzers in Bezug auf das Symbol der Zielanwendung erkannt wird, nachdem das Symbol der Zielanwendung in dem Fingerabdruckerfassungsbereich angezeigt wird, den Anzeigebildschirm gemäß den Benutzerfingerabdruckinformationen, entsprechend dem vorbestimmten Betrachtungsvorgang, zu entsperren und eine Nachrichtenschnittstelle der Zielanwendung auf dem Anzeigebildschirm anzuzeigen.

6. Endgerät nach Anspruch 5, wobei
das erste Bestimmungsmodul (41) umfasst: ein erstes Bestimmungsuntermodul, das verwendet wird, um die Zielanwendung, entsprechend der Kommunikationsnachricht, zu bestimmen, wenn sich das Endgerät in einem Zustand mit Bildschirm-Abschaltung befindet und die Kommunikationsnachricht empfängt; und das erste Anzeigemodul (42) umfasst: ein erstes Anzeigeuntermodul, das verwendet wird, um das Symbol zum Anzeigen der Zielanwendung in dem Fingerabdruckerfassungsbereich aufzuhellen.

7. Endgerät nach Anspruch 5, ferner umfassend:
ein zweites Anzeigemodul, das verwendet wird, um ein Fingerabdruckentsperrungsmuster in dem Fingerabdruckerfassungsbereich anzuzeigen, wenn sich das Endgerät im Bereitschaftszustand befindet und keine Kommunikationsnachricht empfängt.

## Revendications

1. Procédé d'affichage d'icône d'application, dans lequel le procédé d'affichage d'icône d'application est appliqué à un terminal, une région de détection d'empreinte digitale se trouvant sur un écran d'affichage du terminal, et le procédé d'affichage d'icône d'application comprend :
déterminer une application cible correspondant à un message de communication lorsque le terminal se trouve dans un état de veille et reçoit le message de communication (11) ; et
afficher une icône de l'application cible dans la région de détection (12) d'empreinte digitale,
si des messages de communication multiples correspondant à des applications cibles multiples sont reçus :
déterminer l'application cible correspondant à chaque message de communication cible, sélectionner, selon les informations de niveau de priorité des applications cibles, l'icône de l'application cible ayant le niveau de priorité le plus élevé parmi les applications cibles, et afficher l'icône de l'application cible ayant le niveau de priorité le plus élevé dans la région de détection (12) d'empreinte digitale ;
évaluer le niveau de priorité du message de communication selon une fréquence d'utilisation de l'application correspondant au message de communication et un contenu principal du message de communication ;
dans lequel après l'étape d'affichage de l'icône de l'application cible dans la région de détection (12) d'empreinte digitale, le procédé d'affichage d'icône d'application comprend en outre :
lors de la détection d'une opération de visualisation prédéterminée d'un utilisateur par rapport à l'icône de l'application cible, déverrouiller l'écran d'affichage selon les informations de l'empreinte digitale de l'utilisateur correspondant à l'opération de visualisation prédéterminée, et afficher le message de communication correspondant à l'application cible sur l'écran d'affichage ; ou
lors de la détection de l'opération de visualisation prédéterminée de l'utilisateur par rapport à l'icône de l'application cible, déverrouiller l'écran d'affichage selon les informations de l'empreinte digitale de l'utilisateur correspondant à l'opération de visualisation prédéterminée, et afficher une interface de message de l'application cible sur l'écran d'affichage.

2. Procédé d'affichage d'icône d'application selon la revendication 1, dans lequel
l'étape de détermination de l'application cible correspondant au message de communication lorsque le terminal est en état de veille et reçoit le message de communication (11) comprend :
déterminer l'application cible correspondant au message de communication lorsque le terminal se trouve dans un état d'écran éteint et reçoit le message de communication ; et
l'étape d'affichage de l'icône de l'application cible dans la région de détection (12) d'empreinte digitale comprend :
éclairer l'icône pour l'affichage de l'application cible dans la région de détection d'empreinte digitale.

3. Procédé d'affichage d'icône d'application selon la revendication 1, comprenant en outre :
afficher un motif de déverrouillage d'empreinte digitale dans la région de détection d'empreinte digitale lorsque le terminal est en état de veille et ne reçoit pas de message de communication.

4. Procédé d'affichage d'icône d'application selon la revendication 1, dans lequel après l'étape d'affichage de l'icône de l'application cible dans la région de détection (12) d'empreinte digitale, le procédé d'affichage d'icône d'application comprend en outre :
effectuer un zoom avant et un zoom arrière de l'icône de l'application cible à tour de rôle à un second intervalle de temps prédéfini, de manière cyclique.

5. Terminal, dans lequel une région de détection d'empreinte digitale se trouve sur un écran d'affichage du terminal, et le terminal comprend :
un premier module de détermination (41), utilisé pour déterminer une application cible correspondant à un message de communication lorsque le terminal se trouve dans un état de veille et reçoit le message de communication ; et
un premier module d'affichage (42), utilisé pour afficher une icône de l'application cible dans la région de détection d'empreinte digitale ;
si des messages de communication multiples correspondant à des applications cibles multiples sont reçus :
le premier module de détermination (41) est en outre utilisé pour déterminer l'application cible correspondant à chaque message de communication cible, sélectionner, selon les informations de niveau de priorité des applications cibles, l'icône de l'application cible ayant le niveau de priorité le plus élevé parmi les applications cibles, et le premier module d'affichage (42) est en outre utilisé pour afficher l'icône de l'application cible ayant le niveau de priorité le plus élevé dans la région de détection d'empreinte digitale ;
le premier module de détermination (41) est en outre utilisé pour évaluer le niveau de priorité du message de communication selon une fréquence d'utilisation de l'application correspondant au message de communication et d'un contenu principal du message de communication ; un premier module de déverrouillage et d'affichage, utilisé pour déverrouiller, lors de la détection d'une opération de visualisation prédéterminée d'un utilisateur par rapport à l'icône de l'application cible après que l'icône de l'application cible est affichée dans la région de détection d'empreinte digitale, l'écran d'affichage selon les informations d'empreinte digitale de l'utilisateur correspondant à l'opération de visualisation prédéterminée, et afficher le message de communication correspondant à l'application cible sur l'écran d'affichage ; ou
un second module de déverrouillage et d'affichage, utilisé pour déverrouiller, lors de la détection de l'opération de visualisation prédéterminée de l'utilisateur par rapport à l'icône de l'application cible après que l'icône de l'application cible est affichée dans la région de détection de l'empreinte digitale, l'écran d'affichage selon les informations de l'empreinte digitale de l'utilisateur correspondant à l'opération de visualisation prédéterminée, et afficher une interface de message de l'application cible sur l'écran d'affichage.

6. Terminal selon la revendication 5, dans lequel
le premier module de détermination (41) comprend : un premier sous-module de détermination, utilisé pour déterminer l'application cible correspondant au message de communication lorsque le terminal est dans un état d'écran éteint et reçoit le message de communication ; et
le premier module d'affichage (42) comprend : un premier sous-module d'affichage, utilisé pour éclairer l'icône pour l'affichage de l'application cible dans la région de détection d'empreinte digitale.

7. Terminal selon la revendication 5, comprenant de plus :
un second module d'affichage, utilisé pour afficher un motif de déverrouillage d'empreinte digitale dans la région de détection d'empreinte digitale lorsque le terminal se trouve dans un état de veille et ne reçoit pas de message de communication.
